(19)

Europäisches Patentamt
European Patent Office
Office européen des brevets

(11) **EP 4 318 635 A1**

(12) **EUROPEAN PATENT APPLICATION**
published in accordance with Art. 153(4) EPC

(43) Date of publication:
 **07.02.2024 Bulletin 2024/06**

(21) Application number: **22780886.2**

(22) Date of filing: **29.03.2022**

(51) International Patent Classification (IPC):
 *H01M 4/13* (2010.01)  *H01M 4/62* (2006.01)
 *H01B 1/06* (2006.01)  *H01B 1/10* (2006.01)
 *H01B 13/00* (2006.01)  *H01M 10/052* (2010.01)
 *H01M 10/0562* (2010.01)

(52) Cooperative Patent Classification (CPC):
 **H01B 1/06; H01B 1/10; H01B 13/00; H01M 4/13;**
 **H01M 4/62; H01M 10/052; H01M 10/0562;**
 **Y02E 60/10**

(86) International application number:
 **PCT/JP2022/015346**

(87) International publication number:
 **WO 2022/210675 (06.10.2022 Gazette 2022/40)**

(84) Designated Contracting States:
 **AL AT BE BG CH CY CZ DE DK EE ES FI FR GB**
 **GR HR HU IE IS IT LI LT LU LV MC MK MT NL NO**
 **PL PT RO RS SE SI SK SM TR**
 Designated Extension States:
 **BA ME**
 Designated Validation States:
 **KH MA MD TN**

(30) Priority: **30.03.2021 JP 2021057227**

(71) Applicant: **Mitsui Mining & Smelting Co., Ltd.**
 **Shinagawa-ku**
 **Tokyo 141-8584 (JP)**

(72) Inventors:
 • **NAKAYAMA, Yuki**
  **Ageo-shi, Saitama 362-0021 (JP)**
 • **TAKAHASHI, Tsukasa**
  **Ageo-shi, Saitama 362-0021 (JP)**

(74) Representative: **Novagraaf Technologies**
 **Bâtiment O2**
 **2, rue Sarah Bernhardt**
 **CS90017**
 **92665 Asnières-sur-Seine Cedex (FR)**

(54) **SOLID ELECTROLYTE AND METHOD FOR PRODUCING SAME**

(57)  A solid electrolyte according to the present invention contains a lithium (Li) element, a phosphorous (P) element, a sulfur (S) element, and a halogen (X) element. The solid electrolyte has a crystal phase that has an argyrodite-type crystal structure. The crystal phase that has an argyrodite-type crystal structure has a crystallite size of 40 nm or less. The solid electrolyte satisfies a ratio Ia/Ib of 0.2 or less, where Ia represents the intensity of a peak A observed in a range of $2\theta = 27.0° \pm 0.5°$ in an XRD pattern, and Ib represents the intensity of a peak B observed in a range of $2\theta = 25.5° \pm 1.0°$ in the XRD patter

Fig. 1

EP 4 318 635 A1

**Description**

**Technical Field**

The present invention relates to a solid electrolyte and a method for producing the same. The present invention also relates to an electrode material mixture, a solid electrolyte layer, and a battery that each contain the solid electrolyte.

**Background Art**

In recent years, a solid electrolyte that can replace a liquid electrolyte used in many liquid-based batteries has attracted attention. A solid-state battery that contains a solid electrolyte is expected to be brought into practical use as a battery that is not only safer than a liquid-based battery that contains a flammable organic solvent, but also has high energy density. As the solid electrolyte, for example, a solid sulfide electrolyte that contains a lithium (Li) element, a phosphorous (P) element, a sulfur (S) element, and a halogen element is proposed (Patent Literatures 1 and 2).

**Citation List**

**Patent Literature**

> Patent Literature 1: US 2020/091552A1
> Patent Literature 2: WO 2020/095937A1

**Summary of Invention**

In recent years, studies have been actively conducted on solid electrolytes, and there is demand for development of solid electrolytes, with which it is possible to obtain more excellent battery characteristics.
Accordingly, it is an object of the present invention to provide a solid electrolyte that can provide excellent battery characteristics, and a method for producing the same.
The present invention provides a solid electrolyte including: a lithium (Li) element, a phosphorous (P) element, a sulfur (S) element, and a halogen (X) element, wherein the solid electrolyte has a crystal phase that has an argyrodite-type crystal structure, the crystal phase that has an argyrodite-type crystal structure has a crystallite size of 40 nm or less, and the solid electrolyte satisfies a ratio Ia/Ib of 0.2 or less, the ratio Ia/Ib being the ratio of Ia relative to Ib, where Ia represents the intensity of a peak A observed in a range of $2\theta = 27.0° \pm 0.5°$ in an X-ray diffraction pattern obtained by measuring the solid electrolyte with an X-ray diffractometer (XRD) using CuK$\alpha$1 rays, and Ib represents the intensity of a peak B observed in a range of $2\theta = 25.5° \pm 1.0°$ in the X-ray diffraction pattern.
The present invention provides a method for producing a solid electrolyte, the method including: a calcination step of calcining a raw material composition at 200°C or more to obtain a calcined product, the raw material composition containing a lithium (Li) element, a phosphorous (P) element, a sulfur (S) element, and a halogen (X) element; and a crushing step of crushing the calcined product by applying a crushing energy E represented by the following equation (1) of 200 J sec/g or more to the calcined product,

$$E \ (J \cdot sec/g) = 1/2ntmv^2/s \qquad\qquad (1)$$

where n represents the number of crushing media, t represents crushing time (sec), m represents the mass (kg) of each of the crushing media, v represents the speed (m/sec) of the crushing media, and s represents the mass (g) of a target to be crushed.

**Brief Description of Drawings**

[Fig. 1] Fig. 1 is a diagram showing X-ray diffraction patterns of solid electrolytes obtained in Examples 1 to 3.
[Fig. 2] Fig. 2 is a diagram showing X-ray diffraction patterns of solid electrolytes obtained in Comparative Examples 1 and 2.

Description of Embodiments

Hereinafter, the present invention will be described based on a preferred embodiment of the present invention. First, a solid electrolyte according to the present invention will be described.

The solid electrolyte of the present invention contains a Li element, a P element, an S element, and an X element.

Examples of the X element include a fluorine (F) element, a chlorine (Cl) element, a bromine (Br) element, and an iodine (I) element. The X element may be any one or a combination of two or more of the above-listed elements. From the viewpoint of ease of generation of a later-described argyrodite-type crystal structure by a solid phase reaction to increase the lithium ion conductivity of the solid electrolyte, the solid electrolyte preferably contains at least a Cl element or a Br element as the X element, and more preferably a Cl element and a Br element.

In the case where the solid electrolyte contains a Br element and a Cl element as the X element, the proportion of the Br element relative to the total number of moles of the Br element and the Cl element, in short, the value of Br/(Br+Cl) is, for example, preferably 0.2 or more, more preferably 0.3 or more, and even more preferably 0.4 or more. On the other hand, the value of Br/(Br+Cl) is, for example, preferably 0.8 or less, more preferably 0.7 or less, and even more preferably 0.6 or less.

In the solid electrolyte of the present invention, the molar ratio (X/P) of the X element relative to the P element is preferably set to a relatively high value. For example, the molar ratio X/P is preferably 1.1 or more, more preferably 1.5 or more, and even more preferably 1.8 or more. On the other hand, the molar ratio X/P is preferably 4.0 or less, more preferably 3.5 or less, and even more preferably 2.4 or less. When the molar ratio X/P is within the predetermined range, the solid electrolyte of the present invention exhibits more excellent lithium ion conductivity. Also, in the case where the solid electrolyte of the present invention is used in a solid-state battery, the solid-state battery exhibits more excellent battery characteristics. The molar ratio X/P can be measured using, for example, ICP emission spectroscopy analysis.

In the solid electrolyte of the present invention, the molar ratio (S/P) of the S element relative to the P element is, for example, preferably 4.9 or less, more preferably 4.5 or less, and even more preferably 4.2 or less. On the other hand, the molar ratio S/P is preferably 3.2 or more, more preferably 3.5 or more, and even more preferably 3.8 or more. When the molar ratio S/P is within the predetermined range, the solid electrolyte of the present invention exhibits more excellent lithium ion conductivity. Also, in the case where the solid electrolyte of the present invention is used in a solid-state battery, the solid-state battery exhibits more excellent battery characteristics. The molar ratio S/P can be measured using, for example, ICP emission spectroscopy analysis.

The solid electrolyte may contain an element other than the Li element, the P element, the S element, and the X element. For example, the Li element may be partially replaced by another alkali metal element, the P element may be partially replaced by another pnictogen element, or the S element may be partially replaced by another chalcogen element.

The solid electrolyte may contain a material that contains another element other than the Li element, the P element, the S element, and the X element as long as the advantageous effects of the present invention are not impaired. The amount of the material contained in the solid electrolyte can be set to, for example, less than 5 mol% at most, preferably less than 3 mol%, and more preferably less than 1 mol%.

The solid electrolyte of the present invention is preferably a crystalline compound. As used herein, the term "crystalline compound" refers to a substance that exhibits a diffraction peak derived from a crystal phase when the solid electrolyte is subjected to X-ray diffraction ("XRD") measurement using an X-ray diffractometer. In particular, the solid electrolyte preferably has a crystal phase that has an argyrodite-type crystal structure from the viewpoint of increasing the lithium ion conductivity of the solid electrolyte.

The term "argyrodite-type crystal structure" used herein refers to a crystal structure of a group of compounds derived from a mineral represented by the following chemical formula: $Ag_8GeS_6$. Whether or not the solid electrolyte of the present invention has a crystal phase that has an argyrodite-type crystal structure can be confirmed by performing XRD measurement or the like. For example, in a diffraction pattern obtained through XRD measurement using CuKα1 rays, the crystal phase that has an argyrodite-type crystal structure exhibits characteristic diffraction peaks at 2θ = 15.3° ± 1.0°, 17.7° ± 1.0°, 25.5° ± 1.0°, 30.0° ± 1.0°, 30.9° ± 1.0°, and 44.3° ± 1.0°. Furthermore, the crystal phase that has an argyrodite-type crystal structure may also exhibit, in addition to the diffraction peaks described above, characteristic diffraction peaks at, for example, 2θ = 47.2° ± 1.0°, 51.7° ± 1.0°, 58.3° ± 1.0°, 60.7° ± 1.0°, 61.5° ± 1.0°, 70.4° ± 1.0°, and 72.6° ± 1.0°, depending on the type of element that constitutes the solid electrolyte. For identification of the diffraction peaks derived from the argyrodite-type crystal structure, it is possible to use, PDF data No. 00-034-0688, for example.

The solid electrolyte may or may not have a crystal phase other than the crystal phase that has an argyrodite-type crystal structure. In the present invention, the solid electrolyte has, for example, a crystal phase that has an argyrodite-type crystal structure as the main phase. As used herein, the term "main phase" refers to a phase that accounts for the largest proportion relative to the total amount of all crystal phases that constitute the solid electrolyte of the present invention. Accordingly, the content of the crystal phase that has an argyrodite-type crystal structure relative to all crystal phases that constitute the solid electrolyte of the present invention is, for example, preferably 60 mass% or more, more preferably 70 mass% or more, 80 mass% or more, 90 mass% or more, or 95 mass% or more. The proportion of the crystal phase can be confirmed by performing, for example, XRD. As a result of the solid electrolyte having a crystal phase that has an argyrodite-type crystal structure as the main phase, it is possible to effectively increase the lithium ion conductivity of the solid electrolyte, as a result of which, battery performance, in particular, the output characteristics of a battery that contains the solid electrolyte can be further improved.

It is preferable that the solid electrolyte of the present invention does not have, for example, a $Li_2S$ crystal phase. In the case where the solid electrolyte of the present invention has a $Li_2S$ crystal phase, the presence ratio is preferably as low as possible. In the case where the solid electrolyte has a $Li_2S$ crystal phase, in a diffraction pattern obtained through XRD measurement using $CuK\alpha1$ rays, a diffraction peak is observed at a position of $2\theta = 27.0° \pm 0.5°$. Accordingly, in the present invention, the solid electrolyte satisfies a ratio Ia/Ib of preferably 0.20 or less, more preferably 0.17 or less, even more preferably 0.15 or less, and yet even more preferably 0, the ratio Ia/Ib being the ratio of Ia relative to Ib, where Ia represents the intensity of a diffraction peak A observed at a position of $2\theta = 27.0° \pm 0.5$, and Ib represents the intensity of a diffraction peak B observed in a range of $2\theta = 25.5° \pm 1.0°$. The diffraction peak B is a diffraction peak derived from the argyrodite-type crystal structure. When the ratio Ia/Ib is less than or equal to the above-described values, lithium ions favorably migrate at the interface between the active material and the solid electrolyte. As a result, the input-output characteristics of the battery can be improved.

A detailed description of the method for measuring the intensities Ia and Ib will be given in Examples, which will be described later.

The term "the intensity of a diffraction peak" used in the specification of the present application refers to the height of the peak.

It is preferable that the solid electrolyte has no crystal phase in addition to the $Li_2S$ crystal phase described above. For example, depending on the conditions for producing the solid electrolyte, in the X-ray diffraction pattern, a diffraction peak C may be observed in a range of $2\theta = 21.3° \pm 0.3°$. The diffraction peak C is derived from a crystal phase other than the argyrodite-type crystal structure. The inventors of the present application consider that the diffraction peak C is derived from a crystal phase disclosed in Patent Literature 2 that was described in the Background Art section given above. The crystal phase derived from the diffraction peak C is more thermodynamically stable than the argyrodite-type crystal structure. Accordingly, depending on the conditions for producing the solid electrolyte, the crystal phase other than the argyrodite-type crystal structure may be generated in the solid electrolyte. In the present invention, the solid electrolyte satisfies a ratio of IC/I0 of preferably 1.55 or less, more preferably 1.40 or less, and even more preferably 1.25 or less, the ratio of IC/I0 being the ratio of IC relative to I0, where IC represents the maximum count number of the diffraction peak C observed in a range of $2\theta = 21.3° \pm 0.3°$, and I0 represents the intensity of a background observed in a range of $2\theta = 23.5° \pm 0.5°$. The reason is that, when the ratio is within the above-described range, the lithium ion conductivity can be more effectively improved.

From the same viewpoint described above, the count number of Ic, where Ic represents the intensity of the diffraction peak C observed in a range of $2\theta = 21.3° \pm 0.3°$, is preferably 300 counts or less, more preferably 200 counts or less, and even more preferably 100 counts or less. The reason is that, when the count number is within the above-described range, the lithium ion conductivity can be more effectively improved.

A detailed description of the method for measuring the maximum count number IC of the diffraction peak C and the count number of Ic will be given in Examples, which will be described later.

As described above, the solid electrolyte has a crystal phase that has an argyrodite-type crystal structure. The crystal phase preferably has low crystallinity from the viewpoint of improving battery performance, in particular, the output characteristics of a battery that contains the solid electrolyte. The inventors of the present application consider that, as a result of the solid electrolyte having lower crystallinity, the solid electrolyte can be easily plastically deformed during production of an all-solid-state battery, as a result of which, the solid electrolyte can have a favorable contact with the active material. The crystallinity of a crystal phase that has an argyrodite-type crystal structure can be evaluated using the crystallite size of the crystal phase as a measure. In the solid electrolyte, the crystal phase that has an argyrodite-type crystal structure has a crystallite size of, for example, preferably 40 nm or less, more preferably 35 nm or less, and even more preferably 30 nm or less. Also, the crystallite size may be, for example, 1 nm or more, 5 nm or more, or 10 nm or more.

A detailed description of the method for measuring the crystallite size will be given in Examples, which will be described later.

The particle size of the solid electrolyte, which is represented by cumulative volume particle size $D_{50}$ at 50% cumulative volume obtained using a laser diffraction scattering particle size distribution measurement method, is, for example, preferably 5 $\mu$m or less, more preferably 3 $\mu$m or less, even more preferably 1.5 $\mu$m or less, yet even more preferably 1.3 $\mu$m or less, and yet even more preferably 1.1 $\mu$m or less. The reason is that, when the particle size is within the above-described range, the contact point and the contact area between the solid electrolyte and the active material particles increase, and thus the input-output characteristics of the battery can be effectively improved.

Also, the particle size $D_{50}$ of the solid electrolyte is, for example, preferably 0.1 $\mu$m or more, more preferably 0.3 $\mu$m or more, and even more preferably 0.5 $\mu$m or more. The reason is that, when the particle size is within the above-described range, it is possible to suppress an excessive increase in the surface area of the solid electrolyte to suppress an increase in resistance. Also, the solid electrolyte can be easily mixed with the active material.

A detailed description of the method for measuring the particle size $D_{50}$ will be given in Examples, which will be described later.

The solid electrolyte of the present invention preferably has lithium ion conductivity when in a solid state. The solid electrolyte of the present invention preferably has a lithium ion conductivity at room temperature, or in other words, at 25°C of preferably 0.1 mS/cm or more, more preferably 0.2 mS/cm or more, and even more preferably 0.4 mS/cm or more. The lithium ion conductivity can be measured using a method described in Examples given later.

Next, a preferred method for producing a solid electrolyte according to the present invention will be described. The production method of the present invention includes: a calcination step of calcining a raw material composition for forming a solid electrolyte; and a crushing step of strongly crushing a calcined product obtained in the calcination step.

For example, the following methods are known as methods for producing a solid electrolyte: a method as disclosed in Patent Literature 1 given above in which mechanical milling is performed, instead of calcining a raw material composition, to produce an intended solid electrolyte; and a method as disclosed in Patent Literature 2 given above in which a raw material composition is calcined, without performing mechanical milling, to produce an intended solid electrolyte.

It is considered that, in the case where a solid electrolyte is produced through mechanical milling in the method disclosed in Patent Literature 1, even when, for example, the milling time is extended, lithium sulfide that is a component contained in the raw material composition remains in the solid electrolyte. Lithium sulfide is a substance that inhibits migration of lithium ions of the active material and the solid electrolyte when contained in a solid-state battery, which impairs the input-output characteristics of the battery.

On the other hand, in the case where the method disclosed in Patent Literature 2 is used, the amount of lithium sulfide that remains in the solid electrolyte is improved. However, depending on the conditions for calcining the raw material composition, instead of an argyrodite-type crystal structure, a crystal phase that is a heterophase that is thermodynamically more stable than the argyrodite-type crystal structure is generated. The heterophase is a crystal phase that corresponds to the diffraction peak C described above and impairs the lithium ion conductivity of the solid electrolyte.

Unlike the production methods disclosed in Patent Literatures 1 and 2, in the production method of the present invention, a method is used in which a combination of calcining a raw material composition and strongly crushing a calcined product through mechanical milling is performed. With this method, lithium sulfide is unlikely to remain in the solid electrolyte, and an argyrodite-type crystal structure is likely to be generated as the main phase. As a reason for this, the following reason can be considered. For example, the crystal phase that corresponds to the diffraction peak C described above is a crystal phase that undergoes a phase transition to an argyrodite-type crystal structure at a high temperature. However, in the case of a conventional calcination method, a stable crystal phase that corresponds to the diffraction peak C is likely to be generated. In contrast, in the production method of the present invention, mechanical milling processing is performed after calcination, and it is thereby possible to maintain the argyrodite-type crystal structure that is a meta-stable phase even at room temperature. That is, the generation of a crystal phase that corresponds to the diffraction peak C can be suppressed.

In the production method of the present invention, as described above, a calcination step of calcining a raw material composition for forming a solid electrolyte is performed first. The raw material composition can be obtained by mixing predetermined raw materials. The predetermined raw materials are substances that contain elements for constituting a solid electrolyte. To be specific, the predetermined raw materials include a Li element-containing compound, an S element-containing compound, a P element-containing compound, and an X element-containing compound.

Examples of the Li element-containing compound include: lithium compounds such as lithium sulfide ($Li_2S$), lithium oxide ($Li_2O$), and lithium carbonate ($Li_2CO_3$); a simple substance of metal lithium; and the like.

Examples of the S element-containing compound include phosphorus sulfides such as phosphorus trisulfide ($P_2S_3$) and phosphorus pentasulfide ($P_2S_5$); and the like. As the sulfur (S) element-containing compound, it is also possible to use a simple substance of sulfur (S).

Examples of the P element-containing compound include: phosphorus sulfides such as phosphorus trisulfide ($P_2S_3$) and phosphorus pentasulfide ($P_2S_5$); phosphorus compounds such as sodium phosphate ($Na_3PO_4$); a simple substance of phosphorus; and the like.

Examples of the X element-containing compound include: compounds that contain one or more elements selected from the group consisting of a fluorine (F) element, a chlorine (Cl) element, a bromine (Br) element, and an iodine (I) element and one or more elements selected from the group consisting of a sodium (Na) element, a lithium (Li) element, a boron (B) element, an aluminum (Al) element, a silicon (Si) element, a phosphorous (P) element, a sulfur (S) element, a germanium (Ge) element, an arsenic (As) element, a selenium (Se) element, a tin (Sn) element, an antimony (Sb) element, a tellurium (Te) element, a lead (Pb) element, and a bismuth (Bi) element; and compounds obtained as a result of oxygen or sulfur being further bonded to any of the above-described compounds that contain the above-described elements. More specifically, the following compounds can be used: lithium halides such as LiF, LiCl, LiBr, and LiI; phosphorus halides such as $PF_3$, $PF_5$, $PCl_3$, $PCl_5$, $POCl_3$, $PBr_3$, $POBr_3$, $PI_3$, $P_2Cl_4$, and $P_2I_4$; sulfur halides such as $SF_2$, $SF_4$, $SF_6$, $S_2F_{10}$, $SCl_2$, $S_2Cl_2$, and $S_2Br_2$; sodium halides such as NaI, NaF, NaCl, and NaBr; boron halides such as $BCl_3$, $BBr_3$, and $BI_3$; and the like. These compounds can be used alone or in a combination of two or more. Out of these, it is preferable to use a lithium halide (LiX, where X represents a halogen).

As an apparatus used to mix the above-described raw materials to prepare a raw material composition, for example, any of the following apparatuses can be used: an attritor, a paint shaker, a planetary ball mill, a ball mill, a bead mill, a homogenizer, and the like. The amounts of the raw materials added when mixing the raw materials are adjusted as appropriate to satisfy an intended composition of a solid electrolyte.

The obtained raw material composition is calcined to cause a solid phase reaction, and thereby a calcined product that has a crystal phase that has an argyrodite-type crystal structure is obtained. As the calcination atmosphere, for example, an inert gas atmosphere such as an argon atmosphere or a nitrogen atmosphere, or a hydrogen sulfide atmosphere can be used.

From the viewpoint of reliably causing a solid phase reaction in the raw material composition, the calcination temperature is, for example, preferably 200°C or more, more preferably 300°C or more, even more preferably 350°C or more, and yet even more preferably 400°C or more. On the other hand, taking industrial manufacturability and economic efficiency into consideration, the calcination temperature is, for example, preferably 700°C or less, more preferably 600°C or less, and even more preferably 550°C or less.

The calcination time may be set to any value as long as a calcined product with an intended composition can be obtained, rather than a critical value. Specifically, the calcination time is preferably set such that a solid phase reaction sufficiently takes place in the raw material composition. The calcination time may be, for example, 30 minutes or more, 2 hours or more, or 3 hours or more. On the other hand, the calcination time may be, for example, 10 hours or less or 5 hours or less.

When an intended calcined product has been obtained in the manner described above, the calcined product is subjected to a crushing step of performing strong crushing on the calcined product. To perform the strong crushing, for example, an attritor, a paint shaker, a planetary ball mill, a ball mill, a bead mill, a homogenizer, or the like can be used. It is advantageous to strongly stir the calcined product to impart high energy to the calcined product when the strong crushing is performed using any of the above-listed apparatuses. The energy imparted to the calcined product is defined by crushing energy E represented by the following equation (1).

$$E \ (J \cdot sec/g) = 1/2ntmv^2/s \qquad (1),$$

where n represents the number of crushing media, t represents crushing time (sec), m represents the mass (kg) of each of the crushing media, v represents the speed (m/sec) of the crushing media, and s represents the mass (g) of a target to be crushed.

The speed v of the crushing media can be calculated based on the following equation (2) in the case where, for example, a planetary ball mill is used.

$$v \ (m/sec) = d\pi R\alpha/60 \qquad (2),$$

where d represents pot diameter (m), R represents rotation speed (rpm), and $\alpha$ represents rotation-to-revolution ratio.

In the case where a crushing machine that has a stirring mechanism such as a bead mill is used, the speed of crushing media corresponds to the peripheral speed v (m/sec) of the stirring mechanism (a disk or the like).

In the crushing step, it is preferable to apply a crushing energy E defined by the above-described equation of 200 J sec/g or more to the calcined product. In the specification of the present application, crushing that applies such high energy to the calcined product is referred to as "strong crushing". By imparting such high energy to the calcined product, it is possible to obtain an advantage in that a solid electrolyte with a crystal phase that has an argyrodite-type crystal structure in which there is no heterophase or the presence ratio of heterophase is very low can be obtained. From the viewpoint of making this advantage more prominent, the crushing energy E applied to the calcined product is more preferably 200 J·sec/g or more and 200000 J·sec/g or less, even more preferably 500 J·sec/g or more and 100000 J·sec/g or less, yet even more preferably 2000 J·sec/g or more and 100000 J·sec/g or less, yet even more preferably 7000 J sec/g or more and 50000 J sec/g or less, and most preferably 7000 J·sec/g or more and 20000 J·sec/g or less.

Conditions for crushing the calcined product to impart crushing energy E within the above-described range to the calcined product are given below, for example.

- Crushing apparatus: planetary ball mill
- Rotation speed: 100 rpm or more and 1000 rpm or less
- Material of crushing media: zirconia or alumina
- Diameter of crushing media: 2 mm or more and 30 mm or less
- Crushing time: 0.5 hours or more and 100 hours or less

Kinetic energy W (J) of each of the crushing media can be expressed as follow.

$$W = 1/2 \, mv^2 \quad (3),$$

where m and v each have the same definition as described above. The numerical value means that the collision energy of each of the crushing media is large. From the viewpoint of facilitating a mechanochemical reaction, the crushing step preferably includes a step in which the kinetic energy W defined by the equation (3) given above is 0.0001 J or more. The kinetic energy W is more preferably 0.001 J or more and 1.0 J or less, even more preferably 0.005 J or more and 0.1 J or less, and yet even more preferably 0.01 J or more and 0.05 J or less.

After the strong crushing has been performed on the calcined product in the manner described above, for the purpose of adjusting the particle size of the calcined product or the like, known crushing processing that applies energy lower than that applied by the strong crushing can be performed.

The known crushing processing is performed such that the solid electrolyte of the present invention has a particle size $D_{50}$ of, for example, preferably 5 $\mu$m or less, more preferably 3 $\mu$m or less, even more preferably 1.5 $\mu$m or less, yet even more preferably 1.3 $\mu$m or less, and yet even more preferably 1.1 $\mu$m or less. The reason is that, when the solid electrolyte has a particle size $D_{50}$ within the above-described range, the contact area between the solid electrolyte and the active material increases, and the output characteristics of the battery are improved.

In the production method of the present invention, it is also preferable that the total crushing energy applied by the strong crushing and the known crushing processing (crushing processing that applies energy lower than that applied by the strong crushing) is within the above-described range. The reason is that, by imparting crushing energy within the above-described range to the calcined product, a solid electrolyte with a crystal phase that has an argyrodite-type crystal structure in which there is no heterophase or the presence ratio of heterophase is very low is more likely to be obtained.

The solid electrolyte of the present invention obtained using the above-described method is, for example, somewhat black in color, unlike the solid electrolyte of Patent Literature 1. The solid electrolyte of Patent Literature 1 is somewhat white in color, unlike the solid electrolyte of the present invention. The inventors of the present application consider that the difference in color is caused by the use of different production methods. To be specific, the solid electrolyte of the present invention is obtained through a calcination step as described above. Through the calcination step, the solid electrolyte turns somewhat black in color. In contrast, the solid electrolyte of Patent Literature 1 turns somewhat white in color because the solid electrolyte of Patent Literature 1 is obtained without a calcination step.

The color of the solid electrolyte of the present invention, which is represented by brightness L* value in an L*a*b* colorimetry system, is preferably 90 or less, more preferably 50 or more and 90 or less, even more preferably 60 or more and 85 or less, and yet even more preferably 75 or more and 82 or less.

A detailed description of the method for measuring the brightness L* value will be given in Examples, which will be described later.

The solid electrolyte obtained using the above-described method can be used as a material for constituting a solid electrolyte layer, a positive electrode layer, or a negative electrode layer. Specifically, the solid electrolyte of the present invention can be used in a battery that includes a positive electrode layer, a negative electrode layer, and a solid electrolyte layer provided between the positive electrode layer and the negative electrode layer. That is, the solid electrolyte can be used in a so-called solid-state battery. More specifically, the solid electrolyte of the present invention can be used in a lithium solid-state battery. The lithium solid-state battery may be a primary battery or a secondary battery. There is no particular limitation on the battery shape. For example, a laminate shape, a cylindrical shape, a prismatic shape, or the like can be used. The term "solid-state battery" used herein encompasses not only a solid-state battery that contains no liquid substance nor gel substance as the electrolyte, but also a solid-state battery that contains, for example, 50 mass% or less, 30 mass% or less, or 10 mass% or less of a liquid substance or a gel substance as the electrolyte.

In the case where the solid electrolyte of the present invention is contained in a solid electrolyte layer, the solid electrolyte layer can be produced using, for example, any of the following methods: a method in which a slurry that contains the solid electrolyte of the present invention, a binder, and a solvent is dropped onto a substrate, and the slurry is spread using a doctor blade or the like; a method in which a substrate and the slurry are brought into contact with each other, and then cut using an air knife; and a method in which a coating film is formed using a screen printing method or the like, and then heated and dried to remove the solvent. Alternatively, the solid electrolyte layer can also be produced by pressing the solid electrolyte of the present invention in the form of a powder into a powder compact, and subjecting the powder compact to appropriate processing.

From the viewpoint of balance between prevention of a short-circuit and volume capacity density, typically, the thickness of the solid electrolyte layer is preferably 5 $\mu$m or more and 300 $\mu$m or less, and more preferably 10 $\mu$m or more and 100 $\mu$m or less.

The solid electrolyte of the present invention is used together with an active material to constitute an electrode material mixture. The proportion of the solid electrolyte in the electrode material mixture is typically 10 mass% or more and 50 mass% or less. The electrode material mixture may also contain other materials such as a conductive aid and a binder as needed. An electrode layer such as a positive electrode layer and/or a negative electrode layer can be produced by mixing the electrode material mixture with a solvent to prepare a paste, applying the paste onto a current collector such as an aluminum foil, and drying the paste.

As a positive electrode material for constituting the positive electrode layer, any positive electrode material used as the positive electrode active material in a lithium ion battery can be used as appropriate. For example, a lithium-containing positive electrode active material, specifically, a spinel-type lithium transition metal oxide, a lithium metal oxide that has a layered structure, and the like can be used. By using a high-voltage type positive electrode material as the positive electrode material, the energy density can be improved. The positive electrode material may contain, in addition to the positive electrode active material, a conductive material or another material.

As a negative electrode material for constituting the negative electrode layer, any negative electrode material used as the negative electrode active material in a lithium ion battery can be used as appropriate. The solid electrolyte of the present invention is electrochemically stable. For this reason, a lithium metal or a carbon-based material, which is a material that performs charging and discharging at a low potential (about 0.1 V versus Li$^+$/Li) corresponding to the potential of the lithium metal, such as graphite, artificial graphite, natural graphite, or non-graphitizable carbon (hard carbon) can be used as the negative electrode material. By using any of the materials listed above as the negative electrode material, the energy density of the solid-state battery can be improved remarkably. It is also possible to use, as the active material, silicon or tin that is considered to be a promising high capacity material. In a battery in which an ordinary electrolyte solution is used, the electrolyte solution reacts with the active material during charging and discharging, and corrosion occurs on the active material surface, causing remarkable deterioration in the battery characteristics. In contrast, when the solid electrolyte of the present invention is used instead of the electrolyte solution, and silicon or tin is used as the negative electrode active material, a corrosion reaction as described above does not occur, and thus the durability of the battery can be improved. The negative electrode material may also contain, in addition to the negative electrode active material, a conductive material or another material.

**Examples**

Hereinafter, the present invention will be described in further detail based on examples. However, the scope of the present invention is not limited to the examples given below.

Example 1

(1) Preparation of Raw Material Composition

A lithium sulfide (Li$_2$S) powder, a phosphorus pentasulfide (P$_2$S$_5$) powder, a lithium chloride (LiCl) powder, and a lithium bromide (LiBr) powder were weighed to a total amount of 5 g to satisfy the following composition: Li$_5$PS$_4$ClBr. 10 mL of heptane was added to these powders to prepare a slurry. The slurry was placed in an 80 mL zirconia container, and set in a planetary ball mill apparatus (P-5 available from Fritsch). As crushing media, 90 g of ZrO$_2$ balls with a diameter of 5 mm was used. The ball mill apparatus was operated at a rotation speed of 100 rpm, and crushing was performed for 10 hours. The obtained slurry was vacuum-dried at room temperature to remove the solvent. In this way, a raw material composition was obtained.

(2) Calcination

The raw material composition was calcined to obtain a calcined product. The calcination was performed using a tubular electric furnace. During the calcination, a 100% pure nitrogen gas was passed through the electric furnace. The calcination temperature was set to 600°C, and the calcination was performed for 4 hours.

(3) Strong Crushing

The calcined product was subjected to strong crushing using a planetary ball mill apparatus (P-5 available from Fritsch). The calcined product was weighed to a total amount of 5 g. 10 mL of heptane was added to the powder to prepare a slurry. The slurry was placed in an 80 mL zirconia container. As crushing media, 90 g of $ZrO_2$ balls with a diameter of 10 mm was used. The ball mill apparatus was operated at a rotation speed of 370 rpm, and the crushing time was set to 2 hours. The strong crushing was performed until the powder had a particle size $D_{50}$ of about 10 $\mu$m. The obtained slurry was vacuum-dried at room temperature to remove the solvent.

(4) Fine Crushing

The powder obtained through the strong crushing was subjected to fine crushing using a planetary ball mill apparatus. The powder was weighed to a total amount of 2 g. 10 mL of toluene and a dispersant were added to the powder to prepare a slurry. The slurry was placed in an 80 mL zirconia container. As crushing media, 90 g of $ZrO_2$ balls with a diameter of 0.8 mm was used. The ball mill apparatus was operated at a rotation speed of 100 rpm, and the fine crushing was performed for 3 hours. The obtained slurry was vacuum-dried at 150°C to remove the solvent. In this way, an intended solid electrolyte powder was obtained. The solid electrolyte powder was subjected to ICP emission spectroscopy analysis, and it was found that the X/P molar ratio was 2, and the S/P molar ratio was 4.
In this example, crushing energy E [J sec/g] was calculated as follows.
First, the crushing energy during strong crushing and the crushing energy during fine crushing were calculated.

Strong Crushing

The density of the $ZrO_2$ crushing media used in this example was 6.0 g/cm$^2$. The number n of crushing media and the mass (kg) of each of the crushing media were calculated based on the amount of the crushing media introduced (90 g), with an assumption that the crushing media were perfect sphere. As a result, it was found that the number n of balls was 28.6, and the mass of each of the crushing media was 0.00314 kg.
The speed (m/sec) of the crushing media when the planetary ball mill apparatus was operated at a rotation speed of 370 rpm was calculated from the equation (2) given above. The rotation-to-revolution ratio $\alpha$ of the planetary ball mill apparatus used in the strong crushing was 2.19, and the inner diameter of the mill pot used in the strong crushing was 0.065 m, from which the ball speed was calculated and found to be 2.76 (m/sec). Crushing energy E was calculated based on this value using the equation (1) given above, and found to be 493 J·sec/g.

Fine Crushing

The crushing energy during fine crushing was calculated in the same manner as the crushing energy during strong crushing was calculated, and found to be 135 J·sec/g.
The crushing energy during the strong crushing step and the crushing energy during the fine crushing step were summed together, and a crushing energy E of 628 J sec/g shown in Table 1 given below was obtained.

Examples 2 and 3

Solid electrolyte powders were obtained in the same manner as in Example 1, except that the crushing time in the strong crushing step in Example 1 was set to 10 hour and 50 hours.

Comparative Example 1

Comparative Example 1 corresponds to an example disclosed in Patent Literature 2.

(1) Preparation of Raw Material Composition

A raw material composition was prepared in the same manner as in Example 1.

(2) Calcination

The raw material composition was calcined to obtain a calcined product. The calcination was performed using a tubular electric furnace. During the calcination, a 100% pure nitrogen gas was passed through the electric furnace. The calcination temperature was set to 600°C, and the calcination was performed for 4 hours.

(3) Weak Crushing

The calcined product was subjected to weak crushing using a planetary ball mill apparatus. The calcined product was weighed to a total amount of 5 g. 10 mL of toluene and a dispersant were added to the powder to prepare a slurry. The slurry was placed in an 80 mL zirconia container. As crushing media, 90 g of $ZrO_2$ balls with a diameter of 5 mm was used. The ball mill apparatus was operated at a rotation speed of 100 rpm, and the weak crushing was performed for 3 hours. The obtained slurry was vacuum-dried at room temperature to remove the solvent.

(4) Fine Crushing

Fine crushing was performed in the same manner as in Example 1.

Comparative Example 2

Comparative Example 2 corresponds to an example disclosed in Patent Literature 1.

(1) Preparation of Raw Material Composition

A raw material composition was prepared in the same manner as in Example 1.

(2) Mechanical Milling

The raw material composition was subjected to mechanical milling using a planetary ball mill apparatus. The raw material composition was weighed to a total amount of 5 g. 10 g of heptane was added to the powder to prepare a slurry. The slurry was placed in an 80 mL zirconia container. As crushing media, 90 g of $ZrO_2$ balls with a diameter of 10 mm was used. The ball mill apparatus was operated at a rotation speed of 370 rpm, and the crushing time was set to 50 hours. The obtained slurry was vacuum-dried at room temperature to remove the solvent.

(3) Fine crushing

Fine crushing was performed in the same manner as in Example 1.

Evaluation 1

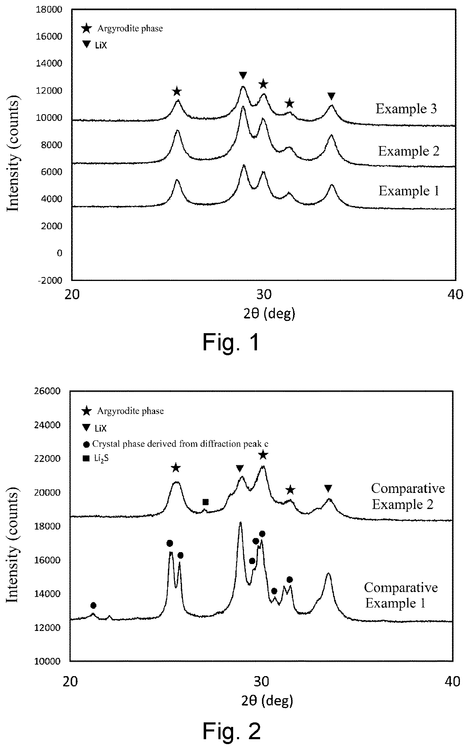

Each of the solid electrolytes obtained in Examples and Comparative Examples was subjected to XRD measurement to calculate the ratio Ia/Ib. The results are shown in Table 1. XRD patterns obtained through the XRD measurement are shown in Figs. 1 and 2. The graphs show the XRD patterns of Examples 1, 2, and 3 and Comparative Examples 1 and 2 that were offset by +3000, +6000, +9000, +12000, +18000 counts, respectively, with respect to the measured values.

The method for calculating the ratio Ia/Ib was performed as follows.

An average count number of peak intensity in a range of $2\theta = 23.5° \pm 0.5°$ was defined as background I0. Also, a maximum count number of peak intensity in a range of $2\theta = 25.5° \pm 1.0°$ was defined as IB. A value obtained by subtracting the background I0 from the maximum count number IB was defined as peak intensity Ib derived from an argyrodite-type crystal structure.

Also, a maximum count number of peak intensity in a range of $2\theta = 27.0° \pm 0.5°$ was defined as IA. A value obtained by subtracting the background I0 from the maximum count number IA was defined as peak intensity Ia derived from a $Li_2S$ crystal structure.

Here, the XRD measurement was performed such that the value of the background I0 was 400 to 800 counts. Also, the XRD measurement was performed such that the maximum peak intensity was 1500 counts or more.

The maximum count number IC of the diffraction peak C was a maximum count number in a range of $2\theta = 21.3° \pm 0.3°$.

As the count number Ic of the diffraction peak C, a value obtained by subtracting the background I0 from the maximum count number IC was used.

Furthermore, the obtained X-ray diffraction patterns were loaded into Smart Lab Studio II. Then, for each of the solid sulfide electrolytes obtained in Examples and Comparative Examples, the crystallite size of a crystal phase with an argyrodite-type crystal structure was calculated using a WPPF method. Apparatus-derived parameters were corrected using standard samples. The results are shown in Table 1. As a standard sample for angular correction, SRM 640f (Si) available from NIST was used. As a standard sample for width correction, SRM 660c ($LaB_6$) available from

NIST was used. As the non-air exposed cell, an ASC airtight sample holder (A00012149) available from Rigaku was used. A transparent airtight film was used as the airtight cover, and an Ar atmosphere was used as the atmosphere.

XRD measurement was performed using an X-ray diffractometer Smart Lab SE available from Rigaku. Conditions for performing the measurement were set as follows.

- Non-air exposure
- Scan axis: $2\theta/\theta$
- Scan range: 10° or more and 120° or less
- Step width: 0.02°
- Scan speed: 1°/min
- X-ray source: CuK$\alpha$1 rays
- X-ray tube voltage: 40 kV
- X-ray tube current: 80 mA

Through XRD measurement performed under the above-described conditions, the count number of the background I0 was in a range of 400 to 800, and the maximum peak intensity was 1500 counts or more.

Evaluation 2

For each of the solid electrolytes obtained in Examples and Comparative Examples, particle size $D_{50}$ was measured using the method described below. The results are shown in Table 1 given below.

Using an automatic sample feeder for laser diffraction particle size distribution measurement apparatus (Microtrac SDC available from Nikkiso Co., Ltd.)), a measurement sample containing the solid electrolyte was irradiated with an ultrasonic wave of 30 W for 60 seconds by setting the flow rate of the solid electrolyte-containing measurement sample to 50%. After that, a particle size distribution was measured using a laser diffraction particle size distribution analyzer MT 3000 II available from Nikkiso Co., Ltd. Then, from the obtained volume-based particle distribution chart, a particle size at a cumulative volume of 10 vol%, a particle size at a cumulative volume of 50 vol%, and a particle size at a cumulative volume of 95 vol% were determined and defined as $D_{10}$, $D_{50}$, and $D_{95}$, respectively. During measurement of the particle sizes $D_{10}$, $D_{50}$, and $D_{95}$, an organic solvent was passed through a 60 $\mu$m filter. Also, the solvent refractive index was set to 1.50, the particle transmission condition was set to "transmission", the particle refractive index was set to 1.59, the shape was set to "non-spherical", the measurement range was set to 0.133 $\mu$m to 704.0 $\mu$m, and the measurement time was set to 10 seconds. Measurement was performed twice, and an arithmetic average value of the obtained measured values of the solid electrolyte was defined as $D_{10}$, $D_{50}$, or $D_{95}$.

Evaluation 3

For each of the solid electrolytes obtained in Examples and Comparative Examples, brightness L* was measured using the method described below. The results are shown in Table 1 given below.

Brightness L* was measured using a spectrophotometer (CM-2600d available from Konica Minolta, Inc.) by filling a glass holder for XRD measurement with the solid electrolyte in the form of a powder. A CIE standard light source D65 was used as a light source.

Evaluation 4

Solid-state batteries were produced using each of the solid electrolytes obtained in Examples and Comparative Examples, and, for each of the solid-state batteries, rate characteristics were measured using a method described below. The results are shown in Table 1 given below.

Material

A LiNi$_{0.6}$Co$_{0.2}$Mn$_{0.2}$O$_2$ (NCM) powder, which is a layered compound, with a Li-Nb-O coating layer formed thereon was used as a positive electrode active material. Graphite was used as a negative electrode active material. Each of the solid electrolytes obtained in Examples and Comparative Examples was used as a solid electrolyte for use in a positive electrode layer. An ordinary argyrodite-type solid sulfide electrolyte was used in a separator layer and a negative electrode layer.

Preparation of Positive Electrode Material Mixture and Negative Electrode Material Mixture

A positive electrode material mixture was prepared by mixing, in a mortar, the positive electrode active material, the solid electrolyte, and a conductive aid (acetylene black) powder at a mass ratio of 60:37:3.

A negative electrode material mixture was prepared by mixing, in a mortar, graphite and the solid electrolyte at a mass ratio of 64:36.

Production of Solid-State Battery Cell

0.05 g of a solid electrolyte was injected into a ceramic cylinder with upper and lower open ends (with an opening diameter of 10.5 mm and a height of 18 mm), with the lower open end portion of the cylinder being closed using a SUS electrode. An electrode was attached to the upper open end portion, and then, the electrode-attached cylinder was subjected to uniaxial press molding performed at a pressure of about 0.8 tf/cm$^2$ to form an electrolyte layer. The upper electrode was temporarily removed, and the positive electrode material mixture was placed on the electrolyte layer and then leveled. After that, the upper electrode was again attached. Next, the lower electrode was temporarily removed, and the negative electrode material mixture was placed on the electrolyte layer. The lower electrode was again attached. Then, the cylinder was subjected to uniaxial press molding performed at a pressure of about 4.6 tf/cm$^2$. After that, the upper electrode and the lower electrode were clamped and restricted at a torque pressure of 4 Nm. In this way, a 1 mAh all-solid-state battery was produced. The all-solid-state battery production process was performed in a glove box purged with dried air with an average dew point of -70°C.

The all-solid-state battery obtained in the manner described above was placed in an environmental testing machine maintained at 25°C, and connected to a charge/discharge measurement apparatus to evaluate the battery characteristics of the battery.

The battery was subjected to charging and discharging by setting 1 mA as 1 C. Charging was performed at 0.2 C to 4.5 V using a CC-CV method to obtain an initial charge capacity. Discharging was performed at 0.2 C to 2.5 V using a CC method to obtain an initial discharge capacity.

Next, after the battery was subjected to charging performed at 0.2 C to 4.5 V using a CC-CV method, the battery was subjected to discharging at 5 C to 2.5 V using a CC method to obtain a discharge capacity at 5 C. The proportion of the discharge capacity at 5 C was calculated, with the discharge capacity at 0.2 C being set to 100% to obtain rate characteristics (5 C/0.2 C [%]).

[Table 1]

| | Example 1 | Example 2 | Example 3 | Comparative Example 1 | Comparative Example 2 |
|---|---|---|---|---|---|
| Compositi on | $Li_5PS_4ClBr$ | | | | |
| Crushing energy E applied to calcined product [J·sec/g] | 628 | 2599 | 12455 | 135 | 182 |
| Generate d phase | Argyrodit e, Lix | Argyrodit e, Lix | Argyrodit e, Lix | Non-argyrodit e, Lix | Argyrodite, Lix |
| Crystallite size [nm] | 15.7 | 14.0 | 14.0 | - | 14.2 |
| la/lb | 0.09 | 0.13 | 0.14 | - | 0.22 |
| Ic [counts] | 47 | 24 | 72 | 315 | 62 |
| IC/IO | 1.10 | 1.03 | 1.09 | 1.57 | 1.11 |
| Brightnes s L* | 79.3 | 79.1 | 79.1 | 85.8 | 93.8 |
| $D_{50}$ [μm] | 0.84 | 0.89 | 1.00 | 0.70 | 0.88 |
| Rate characteri stics (5 C/0.2 C) [%] | 47.0 | 49.8 | 50.1 | 37.9 | 43.7 |

As can be clearly seen from the results shown in Table 1, the solid-state batteries obtained using the solid electrolytes obtained in Examples exhibited rate characteristics higher than those of Comparative Examples.

Also, as can be clearly seen from the XRD patterns shown in Figs. 1 and 2, the solid electrolytes obtained in Examples exhibited no diffraction peaks derived from lithium sulfide.

Industrial Applicability

As described in detail above, with the solid electrolyte of the present invention, it is possible to obtain excellent battery characteristics. Also, according to the production method of the present invention, it is possible to easily produce the solid electrolyte.

**Claims**

1.  A solid electrolyte comprising:

    a lithium (Li) element, a phosphorous (P) element, a sulfur (S) element, and a halogen (X) element,
    wherein the solid electrolyte has a crystal phase that has an argyrodite-type crystal structure,
    the crystal phase that has an argyrodite-type crystal structure has a crystallite size of 40 nm or less, and
    the solid electrolyte satisfies a ratio Ia/Ib of 0.2 or less, the ratio Ia/Ib being the ratio of Ia relative to Ib, where Ia represents the intensity of a peak A observed in a range of $2\theta = 27.0° \pm 0.5°$ in an X-ray diffraction pattern obtained by measuring the solid electrolyte with an X-ray diffractometer (XRD) using CuK$\alpha$1 rays, and Ib represents the intensity of a peak B observed in a range of $2\theta = 25.5° \pm 1.0°$ in the X-ray diffraction pattern.

2.  The solid electrolyte according to claim 1,
    wherein the solid electrolyte satisfies a ratio IC/I0 of 1.55 or less, the ratio IC/I0 being the ratio of IC relative to I0, where IC represents the maximum count number of a peak C observed in a range of $2\theta = 21.3° \pm 0.3°$ in the X-ray diffraction pattern, and I0 represents the intensity of a background observed in a range of $2\theta = 23.5° \pm 0.5°$ in the X-ray diffraction pattern.

3.  The solid electrolyte according to claim 1 or 2,
    wherein the solid electrolyte has a brightness L* value in an L*a*b* colorimetry system of 90 or less.

4.  The solid electrolyte according to any one of claims 1 to 3,
    wherein the solid electrolyte has a cumulative volume particle size $D_{50}$ at 50% cumulative volume obtained using a laser diffraction scattering particle size distribution measurement method of 5 $\mu$m or less.

5.  The solid electrolyte according to any one of claims 1 to 4,
    wherein a molar ratio of the halogen (X) element to the phosphorous (P) element is 1.1 or more, and
    a molar ratio of the sulfur (S) element to the phosphorous (P) element is 4.9 or less.

6.  The solid electrolyte according to any one of claims 1 to 5,
    wherein the halogen (X) element includes a chlorine (Cl) element and a bromine (Br) element.

7.  A method for producing a solid electrolyte, comprising:

    a calcination step of calcining a raw material composition at 200°C or more to obtain a calcined product, the raw material composition containing a lithium (Li) element, a phosphorous (P) element, a sulfur (S) element, and a halogen (X) element; and
    a crushing step of crushing the calcined product by applying a crushing energy E represented by the following equation (1) of 200 J sec/g or more to the calcined product,

$$E \ (J \cdot sec/g) = 1/2 ntmv^2/s \qquad (1)$$

    where n represents the number of crushing media, t represents crushing time (sec), m represents the mass (kg) of each of the crushing media, v represents the speed (m/sec) of the crushing media, and s represents the mass (g) of a target to be crushed.

8.  The method according to claim 7,
    wherein the calcined product is crushed to have a cumulative volume particle size $D_{50}$ at 50% cumulative volume obtained using a laser diffraction scattering particle size distribution measurement method of 5 $\mu$m or less.

9. An electrode material mixture comprising:

   the solid electrolyte according to any one of claims 1 to 6; and
   an active material.

10. A solid electrolyte layer comprising:
    the solid electrolyte according to any one of claims 1 to 6.

11. A battery comprising:

    a positive electrode layer;
    a negative electrode layer; and
    a solid electrolyte layer provided between the positive electrode layer and the negative electrode layer,
    wherein the battery contains the solid electrolyte according to any one of claims 1 to 6.

Fig. 1

Fig. 2

## INTERNATIONAL SEARCH REPORT

| International application No. |
| --- |
| **PCT/JP2022/015346** |

**A. CLASSIFICATION OF SUBJECT MATTER**

*H01M 4/13*(2010.01)i; *H01M 4/62*(2006.01)i; *H01B 1/06*(2006.01)i; *H01B 1/10*(2006.01)i; *H01B 13/00*(2006.01)i; *H01M 10/052*(2010.01)i; *H01M 10/0562*(2010.01)i
FI:  H01B1/06 A; H01M10/052; H01M4/62 Z; H01M4/13; H01B1/10; H01B13/00 Z; H01M10/0562

According to International Patent Classification (IPC) or to both national classification and IPC

**B. FIELDS SEARCHED**

Minimum documentation searched (classification system followed by classification symbols)

H01M4/13; H01M4/62; H01B1/06; H01B1/10; H01B13/00; H01M10/052; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2018/216730 A1 (IDEMITSU KOSAN CO., LTD.) 29 November 2018 (2018-11-29) paragraphs [0078]-[0082], [0105], fig. 2 | 1-2, 4-6, 9-11 |
| A | | 3, 7-8 |
| Y | JP 2017-100907 A (IDEMITSU KOSAN CO., LTD.) 08 June 2017 (2017-06-08) paragraphs [0070], [0090] | 1-2, 4-6, 9-11 |
| A | | 3, 7-8 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 June 2022** | **14 June 2022** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

INTERNATIONAL SEARCH REPORT
Information on patent family members

International application No.

**PCT/JP2022/015346**

| Patent document cited in search report | | | Publication date (day/month/year) | Patent family member(s) | | | Publication date (day/month/year) |
|---|---|---|---|---|---|---|---|
| WO | 2018/216730 | A1 | 29 November 2018 | US | 2020/0091552 | A1 | |
| | | | | paragraphs [0195l-[0202], [0252], fig. 2 | | | |
| JP | 2017-100907 | A | 08 June 2017 | US | 2017/0155170 | A1 | |
| | | | | paragraphs [0116], [0155]-[0157] | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020091552 A1

- WO 2020095937 A1